# EUROPÄISCHE PATENTANMELDUNG

(11) **EP 1 640 204 A2**
(43) Veröffentlichungstag der Anmeldung: **29.03.2006**
(21) Anmeldenummer: 05108648.6
(22) Anmeldetag: 20.09.2005
(51) Int. Cl.: B60K 23/08, F16H 61/00, H02K 11/04

(54) **Elektromechanische Verstelleinrichtung für ein Getriebe eines Kraftfahrzeuges**

(30) Priorität: 23.09.2004 AT 69304 U
(71) Anmelder: Siemens AG Österreich, 1210 Wien (AT)
(72) Erfinder: Hellinger, Leopold, 3710 Ziersdorf (AT); Neumann, Gerhard, 3231 St. Margarethen (AT)
(74) Vertreter: Peham, Alois

(57) **Zusammenfassung**

Eine elektromechanische Verstelleinrichtung für ein Getriebe eines Kraftfahrzeuges besteht aus einem elektromechanischen Antrieb mit einem Elektromotor, der mit einem Stellgetriebe gekoppelt und mit einer Steuerschaltung elektrisch verbunden ist. Bei einer integrierten Bauweise, bei der die Steuerschaltung sich in unmittelbarer Nähe des Getriebes bzw. des Elektromotors befindet, sind die Bauelemente der Steuerschaltung einer hohen Wärmebelastung ausgesetzt.

Um die Wärmebelastung der elektrischen Bauelemente der Steuerschaltung niedrig zu halten, ist in einem Bereich der Anlage des Gehäuses der Steuerschaltung mit dem Gehäuse des Stellgetriebes ein Wärmeisolator ausgebildet.

## Beschreibung

### Technisches Gebiet

Die Erfindung betrifft eine elektromechanische Verstelleinrichtung zum Einstellen der Schaltstellung eines Getriebes eines Kraftfahrzeuges mit einem, in einem Gehäuse untergebrachten Elektromotor, der über ein am Getriebe montiertes Stellgetriebe, dessen Abtrieb durch eine Wanddurchführung geführt ist, auf eine Stellmechanik einwirkt und eine von einer Steuerschaltung gesteuerte Stellbewegung ausführt.

### Stand der Technik

Ein Getriebe hat die Aufgabe, die vom Motor erzeugte Gesamtantriebsleistung je nach vorliegenden Fahrverhältnissen und entsprechend dem Leistungswunsch des Fahrzeuglenkers auf die vordere bzw. hintere Antriebsachse des Kraftfahrzeugs zu übertragen. Bei einem Allradfahrzeug wird die Gesamtantriebsleistung in Teilantriebsleistungen für die jeweils angetriebenen Achsen aufgeteilt. Diese Aufteilung erfolgt in einem sog. Verteilergetriebe, wobei eine elektromechanische Verstelleinrichtung die jeweilige Schaltstellung des Verteilergetriebes vorgibt.

Eine solche elektromechanische Verstelleinheit ist aus der DE 100 10 636 A 1 bekannt. Sie besteht aus einem Elektromotor, der mit einem Schneckengetriebe gekoppelt ist und von einer Steuerschaltung gesteuert wird. Elektromotor, Schneckengetriebe und Steuerschaltung sind in einem gemeinsamen Gehäuse untergebracht. Die elektronischen Bauteile der Steuerschaltung befindet sich auf einem plattenförmigen Schaltungsträger, der im wesentlichen parallel und in unmittelbarer Nähe zur Stirnfläche des Schneckenrades angeordnet ist, so dass ein auf dem Schaltungsträger befindlicher Sensor die Größe der Bewegung des Stellantriebs erfassen kann. Durch diese Konstruktion lässt sich ein hoher Integrationsgrad von mechanischen, elektromechanischen und elektronischen Komponenten erreichen. Von Nachteil ist aber, dass nicht nur die Getriebewärme sondern auch die bei Betrieb des Elektromotors anfallende Wärme über die mit dem Schneckenrad kämmende Welle an den Schaltungsträger gelangt und dort die elektronischen Bauteile zusätzlich erwärmt. Eine Wärmezufuhr zu den elektronischen Bauteilen ist aber unerwünscht, denn sie erhöht die Ausfallrate.

### Darstellung der Erfindung

Aufgabe der vorliegenden Erfindung ist es, eine elektromechanische Verstelleinrichtung für ein Getriebe eines Kraftfahrzeuges so anzugeben, dass die Wärmebelastung der elektronischen Bauelemente der Steuerschaltung geringer ist.

Die Lösung der Aufgabe erfolgt durch die Merkmale des Anspruchs 1. Vorteilhafte Ausgestaltungen der Erfindung sind Gegenstand von abhängigen Ansprüchen.

Gemäß der Erfindung sind getrennte Gehäuse für die Steuerschaltung und für das Stellgetriebe vorgesehen, wobei ein erstes Gehäuse, das Gehäuse der Steuerschaltung, auf einem zweiten Gehäuse, dem Gehäuse des Stellgetriebes, montiert ist und in einem Bereich der Anlage dieser beiden Gehäuse eine Wärmeisolation ausgebildet ist. Ein wesentlicher Vorteil der Erfindung besteht darin, dass die Steuerelektronik einerseits vorteilhaft in unmittelbarer Nähe zum elektrischen Antrieb angeordnet ist, andererseits aber von der Betriebswärme des Getriebes und der des elektrischen Antriebs gut isoliert ist. Die Bauelemente der Steuerelektronik sind dadurch einer geringeren Wärmebelastung ausgesetzt, was günstig für die Zuverlässigkeit der Verstelleinrichtung ist. Die Wärmeisolation kann auf unterschiedliche Weise realisiert sein.

Eine bevorzugte Ausgestaltung der Erfindung sieht vor, dass das Gehäuse der Steuerelektronik zumindest im Bereich der Anlage mit dem Gehäuse des Stellgetriebes aus einem Werkstoff besteht, dessen Wärmeleitfähigkeit niedriger ist als die Wärmeleitfähigkeit des ersten Gehäuses. Das Gehäuse der Steuerelektronik selbst bewirkt hier die gewünschte Wärmedämmung. Gleichzeitig kann, wenn das Gehäuse des Stellgetriebes aus einem genügend gut wärmeleitenden Material, wie beispielsweise Metall besteht, ein höheres Wärmepotential des Elektromotors an ein niedrigeres Wärmepotential des Getriebes des Kraftfahrzeuges abgegeben werden, ohne dass dabei die Steuerelektronik Schaden erleidet.

In einer bevorzugten Weiterbildung der Erfindung sind im ersten Gehäuse und/oder im zweite Gehäuse im Bereich der Anlage Einbuchtungen ausgebildet, so dass die beiden Gehäuse teilflächig aneinander anliegen. Dadurch wird ein Leerraum im Bereich der Anlage gebildet, der die Konvektion unterbindet. Da der Wärmewiderstand umgekehrt proportional der Anlagefläche ist, bewirkt eine verringerte Anlagefläche eine starke Verringerung des Wärmestroms zu den Bauteilen der Steuerschaltung.

Günstig ist, wenn das erste Gehäuse aus einem schalenförmigen Basisteil und einem darauf befestigten Deckelteil besteht. Das Basisteil kann kostengünstig in Spritzgusstechnik aus einem Kunststoff gefertigt werden. Das Deckelteil ist bevorzugt aus einem gut wärmeleitenden Material hergestellt und führt die Wärme aus dem Innenraum des Gehäuses der Steuerschaltung nach außen.

Eine besonders gute Wärmeisolation und mechanische Festigkeit erreicht man, wenn der verwendete polymere Werkstoff durch 20-40 Volumenprozent Glasfaser verstärkt ist.

Eine besonders bevorzugte Ausführung der Erfindung ist dadurch gekennzeichnet, dass am Basisteil ein Fortsatz (11) mit einer Steckvorrichtung ausgebildet ist, dass in einem montierten Zustand sich der Fortsatz in Richtung des Getriebes erstreckt und die Steckvorrichtung in eine korrespondierende motorseitigen Steckvorrichtung gesteckt ist und dass die elektrische Verbindung zwischen der Steuerschaltung und dem Motor durch eine an einem Flansch des zweiten Gehäuses ausgebildete Ausnehmung geführt ist. Durch diese Konstruktion entfallen außenseitige Verbindungsleitungen und die Montage ist einfacher möglich.

Für die Isolation der getriebeseitigen Betriebswärme ist es ferner günstig, wenn die Steuerschaltung auf einem plattenförmigen, starren Schaltungsträger ausgebildet ist und dieser in einem Abstand zum Boden des Basisteils angeordnet ist.

Um eine besonders niedrige Wärmebelastung der elektrischen Bauteile der Steuerschaltung zu erreichen, ist in einer Weiterbildung vorgesehen, dass jene Bauelemente, welche bei Betrieb eine hohe Verlustleistung entwickeln, auf einer zum Deckelteil weisenden Seite des Schaltungsträgers angebracht sind und jeweils durch Wärmeleitkörper mit dem Deckelteil wärmeleitend verbunden sind. Dadurch kann die Verlustleistung der Elektronik durch Kühlrippen am Deckelteil an die Umgebungsluft abgeführt werden.

Die Wärmeleitteile und der Deckel werden bevorzugt einstückig, z.B. in Alugießtechnik hergestellt.

### Kurzbeschreibung der Zeichnungen

Zur weiteren Erläuterung der Erfindung wird im nachfolgenden Teil der Beschreibung auf die Zeichnungen Bezug genommen in denen weitere vorteilhafte Ausgestaltungen, Einzelheiten und Wirkungen der Erfindung zu entnehmen sind. Es zeigen:
- Figur 1: eine Ausführungsform der erfindungsgemäßen elektromechanischen Verstelleinrichtung in einem angebauten Zustand an einem Verteilergetriebe eines Kraftfahrzeuges;
- Figur 2: eine schematische Darstellung der erfindungsgemäßen Verstelleinrichtung;
- Figur 3: die elektromechanische Verstelleinrichtung in einer Explosionsdarstellung.

### Ausführung der Erfindung

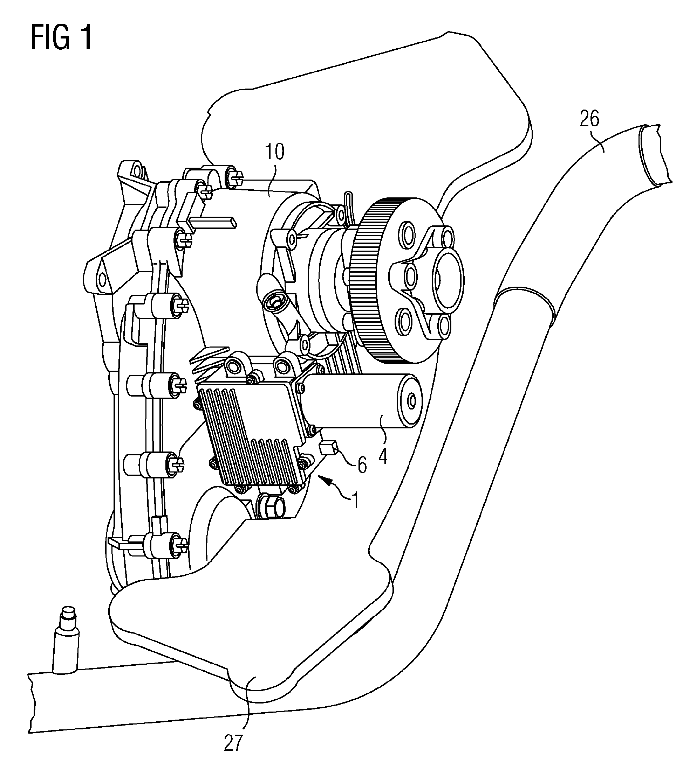

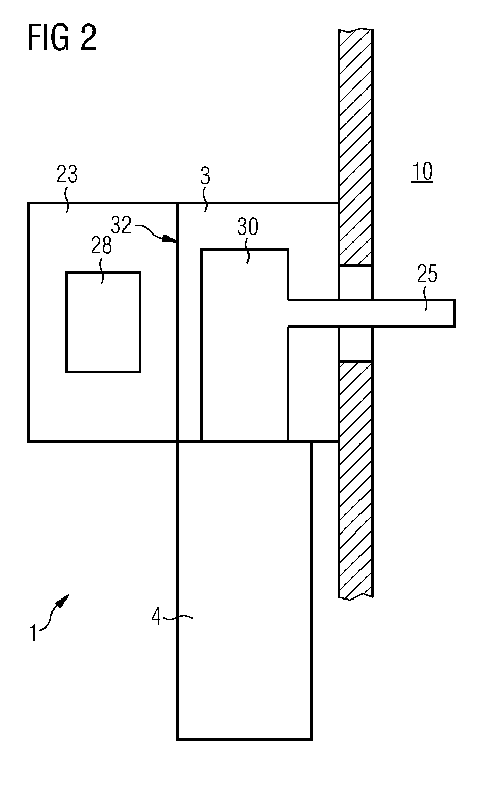

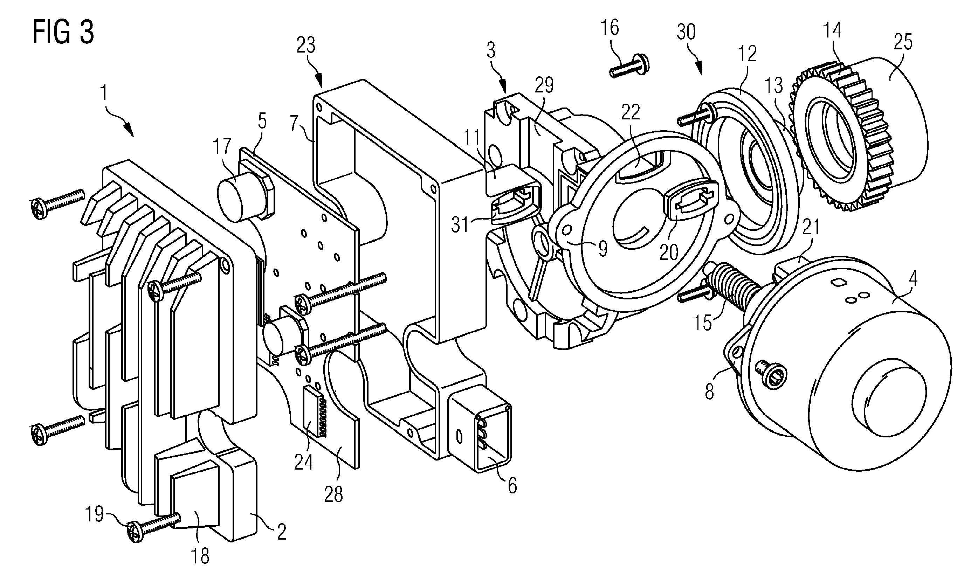

Die Figur 1 zeigt eine Ausführungsform der erfindungsgemäßen elektromechanischen Verstelleinrichtung 1 in einem angebauten Zustand an einem Verteilergetriebe 10 eines Kraftfahrzeuges. Die Verstelleinrichtung 1 besteht aus einem Elektromotor 4, der mit einem Stellgetriebe 30 (Figur. 2) in Verbindung steht, um im Getriebe 10 Getriebestellelemente zu betätigen. Den Betätigungsvorgang steuert eine mit dem Stellgetriebe 30 integrierte Steuerschaltung 28 (Figur 2 und 3). Durch eine Steckvorrichtung 6 wird die Steuerschaltung mit einem KfZ-Kommunikationsnetz und mit der Fahrzeugbatterie verbunden. Ein Schutzblech 27 schützt die Verstelleinrichtung 1 im Motorraum vor der Wärme in einem Abgasrohr 26.

In der Figur 2 ist die erfindungsgemäße Verstellvorrichtung 1 schematisch dargestellt. An der Wand eines Getriebes 10 ist im Bereich einer Ausnehmung das Gehäuse 3 des Stellgetriebes 30 befestigt. Das Stellgetriebe 30 weist einen Abtrieb 25 auf, der durch die Ausnehmung in der Wand geführt ist und im Getriebe 10, über nicht näher dargestellte Getriebestellelemente, eine Schaltstellung beeinflusst. An einer von der Wand des Getriebes 10 abgewandten Seite des Gehäuses 3 ist ein zweites Gehäuse 23 montiert, das die Steuerschaltung 28 beinhaltet. Deren Steuersignale sind an den am Stellgetriebe 30 angeflanschten Motor 4 geleitet. In einem Bereich der Anlage 32 ist erfindungsgemäß eine Wärmeisolation ausgebildet, welche dem, vom Getriebe 10 bzw. vom Motor 4 erzeugten und zur Steuerschaltung 28 gerichteten Wärmestrom entgegen wirkt.

Die Figur 3 zeigt die erfindungsgemäße elektromechanische Stelleinrichtung 1 in einer Explosionsdarstellung. Der von einer Steuerschaltung 28 gesteuerte Elektromotor 4 betätigt - wie bereits oben erwähnt - über das Stellgetriebe 30, Stellelemente im Verteilergetriebe, so dass eine der jeweiligen Fahrsituation angepasste Getriebeübersetzung bereitgestellt wird. Das Stellgetriebe 30 umfasst eine Schneckenwelle 15, eine Schneckenscheibe 14 und einen Abtrieb 25, der durch die Wand des Getriebes geführt ist. Das Schneckengetriebe 14,15 der Verstelleinrichtung 1 befindet sich in einem metallischen Gehäuse 3, das z.B. aus Alu-Druckguss besteht. An diesem Gehäuse 3 ist in Richtung quer zur Achse des Schneckenrades 14 ein Flansch 9 ausgebildet. An diesem Flansch 9 ist über einen Gegenflansch 8 der Elektromotor 4 befestigt. Der Abtrieb 25 des Stellgetriebes 30 ist durch ein geschlossenes Wälzlager 13 gelagert. Getriebeseitig ist der Innenraum des Gehäuses 23 durch einen Radialwellendichtring 12 abgedichtet.

Auf einer vom Verteilergetriebe 10 abgewandten Seite des Gehäuses 3 des Stellgetriebes 30 ist das Gehäuse 3 durch Befestigungsschrauben 16 befestigt. Das Gehäuse 23 beinhaltet die Bauelemente 24 der Steuerschaltung 28, die sich auf einem plattenförmigen Schaltungsträger 5, beispielsweise einer Fr-4 Leiterplatte oder einem Keramiksubstrat mit einer hohen Funktionsintegration befindet. Das Gehäuse 23 besteht aus einer Kunststoffschale 7, die z.B. in Spritzgusstechnik gefertigt ist. Der Schaltungsträger 5 ist in einem Abstand zum Boden der Kunststoffschale 7 mittels Schrauben befestigt. Die Öffnung der Kunststoffschale 7 verschließt ein Deckelteil 2 aus Metall. Ein besonders geeigneter Werkstoff für die Kunststoffschale 7 ist Polyamid 6.6. Die am Getriebe 10 montierte Verstelleinrichtung 1 ist bei Betrieb hohen mechanischen Belastungen ausgesetzt, d.h. bis zu 200-fache Erdbeschleunigung bei einer Frequenz von 300 Hz. Hinsichtlich der Isolationseigenschaft, der Vibrationsbeständigkeit und Dimensionsstabilität der Kunststoffschale 7 hat sich eine Beimengung von 30-40% Glasfaser zum Polyamid als besonders günstig erwiesen.

Bei Betrieb erwärmt sich das Verteilergetriebe 10 (Figur 1) auf etwa 130 Grad Celsius; es kann aber auch zu Temperaturspitzen von bis zu 140 Grad Celsius kommen. Im Elektromotor 4 kann die Betriebstemperatur bis auf 180 Grad Celsius ansteigen. Um die Steuerschaltung 28 vor dieser Wärme zu schützen, ist erfindungsgemäß eine Wärmedämmung vorgesehen, die im Bereich der Anlage 32 zwischen dem Gehäuse 3 und dem Gehäuse 23 ausgebildet ist. Hierzu ist das Gehäuse 3 aus einem Werkstoff mit geringer Wärmeleitfähigkeit gefertigt und weist im Boden des Basisteils 7 Einbuchtungen 29 auf. Diese Einbuchtungen 29 erzeugen im Anlagebereich 23 Leerräume und bewirken, dass das Bodenteil des Gehäuses 23 nur teilflächig am Gehäuse 3 des Stellgetriebes 30 anliegt, sodass die vom Verteilergetriebe 10 und vom Elektromotor 4 erzeugte Wärme schlecht bzw. gar nicht an die elektronischen Baumelemente 24 der Steuerschaltung 28 geleitet wird. Dadurch werden die Bauelemente 24 auf dem Träger 5 von der getriebe- bzw. elektromotorseitigen Betriebstemperatur weitgehend entkoppelt. Infolgedessen verringert sich jeweils die Betriebstemperatur der Bauelemente 24, was die Zuverlässigkeit der Steuerschaltung 28 erhöht.

Andererseits bewirkt das Metallgehäuse 3 eine teilweise Ableitung der Betriebswärme des Elektromotors 4 an das Gehäuse des Verteilergetriebes 10. Mit anderen Worten, für den Elektromotor 4 wirkt das Verteilergetriebe 10 (wenn es sich auf einer geringeren Betriebstemperatur befindet) als Wärmesenke. Durch diese Wärmeableitung verringert sich die Wärmebeanspruchung der Wicklungsisolation des Elektromotors 4, was günstig für die Zuverlässigkeit des Motors ist.

Der becherförmige Rand der Kunststoffschale 7 weist Gewindebohrungen auf, die zur Aufnahme von Befestigungsschrauben 19 dienen, mittels derer das metallische Deckelteil 2 befestigt wird. Auf der zum Deckelteil 2 gewandten Seite des Schaltungsträgers 5 sind Wärmeleitkörper 17 vorgesehen. Diese Wärmeleitkörper 17 liegen in einem zusammengebauten Zustand am Deckelteil 2 wärmeleitend an. Durch diese wärmeleitende Verbindung wird die, in bestimmten elektronischen Bauelementen 24 anfallende Wärme, an das Deckelteil 2 geleitet. Das Deckelteil 2 weist außenseitig Kühlrippen 18 auf, welche die im Innenraum des Gehäuses 3 anfallende Wärme an den Außenraum ableiten.

Durch die erfindungsgemäße Wärmeisolation zwischen dem Gehäuse 3 und dem Gehäuse 23, sowie durch die gute Ableitung der von den elektronischen Bauelementen 24 hervorgerufenen Erwärmung, verringert sich deren Betriebstemperatur, wodurch sich die Zuverlässigkeit der Steuerschaltung 28 erhöht.

Das Gehäuse 23 weist einen zum Verteilergetriebe 10 weisenden Fortsatz 11 auf, an dem eine Steckbuchse 31 für eine am Gehäuse des Motors 4 ausgebildete Steckvorrichtung 21 ausgebildet ist. Im zusammengebauten Zustand greift die Steckvorrichtung 21 durch ein Einsatzteil 20 in eine Ausnehmung 22 am Flansch 9 des Gehäuses 3 durch. Auf diese Weise ist im eingesteckten Zustand die Steuerelektronik 28 über gehäuseintern geführte Verbindungsleitungen mit dem Elektromotor 4 verbunden. Die elektrische Verbindung zwischen Steuerschaltung 28 und Elektromotor 4 ist dadurch sehr gut geschützt und beim Zusammenbau einfach herstellbar.

Am Gehäuse 23 ist außenseitig eine Steckvorrichtung 6 vorgesehen, durch die eine elektrische Verbindung mit einem CAN Bus oder ähnlichem Bus zu einer übergeordneten Steuereinrichtung sowie zur Energieversorgung des Fahrzeugs hergestellt werden kann.

Zusammenstellung der verwendeten Bezugszeichen
- 1: elektromechanische Verstelleinrichtung
- 2: Deckelteil
- 3: erstes Gehäuse, beinhaltet das Stellgetriebe 30
- 4: Motor, Elektromotor
- 5: plattenförmige Schaltungsträger
- 6: Steckvorrichtung
- 7: Basisteil von 23, Kunststoffschale
- 8: Gegenflansch
- 9: Flansch
- 10: Getriebe, Verteilergetriebe
- 11: getriebeseitiger Fortsatz
- 12: Radialwellendichtring
- 13: Wälzlager
- 14: Schneckenscheibe
- 15: Schneckengetriebewelle
- 16: Befestigungsschrauben für 2
- 17: Wärmeleitkörper
- 18: Kühlrippen
- 19: Befestigungsschrauben
- 20: Einsatzteil
- 21: Steckvorrichtung am Motor
- 22: Ausnehmung
- 23: zweites Gehäuse, beinhaltet die Steuerelektronik 28
- 24: elektronische Bauelemente
- 25: Abtrieb des Stellgetriebes
- 26: Abgasrohr
- 27: Schutzblech
- 28: Steuerschaltung
- 29: Einbuchtungen
- 30: Stellgetriebe
- 31: Steckbuchse in 11
- 32: Bereich der Anlage von 3 und 23

## Patentansprüche

1. Elektromechanische Verstelleinrichtung für ein Getriebe (10) eines Kraftfahrzeuges umfassend einen elektromechanischen Antrieb mit einem Motor (4) der mit einem Stellgetriebe (30) gekoppelt und mit einer Steuerschaltung (28) elektrisch verbunden ist, um über einen Abtrieb (25) des Stellgetriebes (30) im Getriebe (10) eine Schaltstellung zu beeinflussen, wobei das Stellgetriebe (30) in einem außenseitig am Getriebe (10) angebrachten ersten Gehäuse (3) untergebracht ist, **dadurch gekennzeichnet, dass** die Steuerschaltung (28) in einem auf dem ersten Gehäuse (3) angebrachten zweite Gehäuse (23) untergebracht ist und in einem Bereich der Anlage (32) der beiden Gehäuse (3,23) eine Wärmeisolation ausgebildet ist.

2. Verstelleinrichtung nach Anspruch 1, **dadurch gekennzeichnet, dass** das zweite Gehäuse (23) zumindest im Bereich der Anlage (32) aus einem Werkstoff besteht, dessen Wärmeleitfähigkeit niedriger ist als die Wärmeleitfähigkeit des ersten Gehäuses (3).

3. Verstelleinrichtung nach Anspruch 1 oder 2, **dadurch gekennzeichnet, dass** im ersten Gehäuse (3) und/oder im zweite Gehäuse (23) im Bereich der Anlage (32) Einbuchtungen (29) ausgebildet sind, sodass die beiden Gehäuse (3,23) teilflächig aneinander anliegen.

4. Verstelleinrichtung nach Anspruch 1, 2 oder 3, **dadurch gekennzeichnet, dass** das zweite Gehäuse (23) auf einer, vom Getriebe (10) abgewandten Seite des ersten Gehäuses (3) angebracht ist.

5. Verstelleinrichtung nach einem der Ansprüche 1 bis 4, **dadurch gekennzeichnet, dass** das zweite Gehäuse (23) aus einem schalenförmigen Basisteil (7) und einem darauf befestigten Deckelteil (2) besteht.

6. Verstelleinrichtung nach Anspruch 5, **dadurch gekennzeichnet, dass** das Basisteil (7) aus einem polymeren Werkstoff, besonders bevorzugt aus Polyamid und das Deckelteil (2) aus einem metallischen Werkstoff, besonders bevorzugt aus einem Leichtmetall oder einer Leichtmetalllegierung hergestellt ist.

7. Verstelleinrichtung nach Anspruch 6, **dadurch gekennzeichnet, dass** der polymere Werkstoff durch 20-40 Volumenprozent Glasfaser verstärkt ist.

8. Verstelleinrichtung nach einem der Ansprüche 5 bis 7, **dadurch gekennzeichnet, dass** am Basisteil (7) ein Fortsatz (11) mit einer Steckvorrichtung (31) ausgebildet ist, dass in einem montierten Zustand sich der Fortsatz (11) in Richtung des Getriebes(10) erstreckt und die Steckvorrichtung (31) in eine korrespondierende motorseitige Steckvorrichtung (21) gesteckt ist und dass die elektrische Verbindung zwischen der Steuerschaltung (28) und dem Motor (4) durch eine an einem Flansch (9) des zweiten Gehäuses (23) ausgebildete Ausnehmung (22) geführt ist.

9. Verstelleinrichtung nach Anspruch 6, 7 oder 8, **dadurch gekennzeichnet, dass** die Steuerschaltung (28) auf einem plattenförmigen, starren Schaltungsträger (5) ausgebildet ist, der in einem Abstand zum Boden des Basisteils (7) angeordnet ist.

10. Verstelleinrichtung nach Anspruch 9, **dadurch gekennzeichnet, dass** die Steuerschaltung (28) elektronische Bauelemente (24) umfasst, die auf einer zum Deckelteil (2) weisenden Seite des Schaltungsträgers (5) angebracht sind und jeweils durch Wärmeleitkörper (17) mit dem Deckelteil (2) wärmeleitend verbunden sind.

11. Verstelleinrichtung nach Anspruch 10, **dadurch gekennzeichnet, dass** außenseitig am Deckelteil (2) Kühlrippen (18) ausgebildet sind.

12. Verstelleinrichtung nach Anspruch 10 oder 11, **dadurch gekennzeichnet, dass** die Wärmeleitkörper (17) und das Deckelteil (2) einstückig ausgebildet und aus einem metallischen Werkstoff hergestellt ist.

13. Verstelleinrichtung nach einem der vorstehenden Ansprüche, **dadurch gekennzeichnet, dass** am Abtrieb (25)an einem stellgetriebeseitigen Ende eine Schneckenscheibe (14) ausgebildet ist, welches in einem montierten Zustand mit einer motorseitigen Schneckengetriebewelle (15) kämmt.

14. Verstelleinrichtung nach einem der vorstehenden Ansprüche, **dadurch gekennzeichnet, dass** zum Anschluss der Steuerschaltung (28) an einen CAN-Bus und an eine Energieversorgung außenseitig am zweiten Gehäuse (23) eine Steckvorrichtung (6) ausgebildet ist.

15. Verstelleinrichtung nach einem der vorstehenden Ansprüche, **dadurch gekennzeichnet, dass** das Getriebe (10) ein Allradverteilergetriebe ist.
